# EUROPEAN PATENT APPLICATION

(11) **EP 3 838 656 A1**
(43) Date of publication of application: **23.06.2021**
(21) Application number: 19218047.9
(22) Date of filing: 19.12.2019
(51) Int. Cl.: B60L 53/12, B60L 53/126

(54) **MOBILE CHARGING DEVICE FOR INDUCTIVE CHARGING OF AN ELECTRIC VEHICLE, ELECTRIC VEHICLE AND METHOD**

(71) Applicant: Vitesco Technologies GmbH, 30165 Hannover (DE)
(72) Inventor: Kumar, Sriram - c/o Continental Automotive GmbH, 81737 München (DE)

(57) **Abstract**

The invention is concerned with a charging device (1) for inductive charging of an electric vehicle (13). The charging device (1) is configured to supply power of an energy source (8) of the charging device (1) to a secondary charging coil (15) of the electric vehicle (13) by means of a primary charging coil (2) of the charging device (1). The charging device (1) is configured to detect the secondary charging coil (15) of the electric vehicle (13). The invention is characterized in that the primary charging coil (2) is mounted on top of a vehicle (3) of the charging device (1), configured to laterally move the primary charging coil (2). The charging device (1) is configured to autonomously align the primary charging coil (2) of the charging device (1) in opposite to the secondary charging coil (15) of the electric vehicle (13) by means of the vehicle (3).

## Description

The invention is concerned with a charging device for inductive charging of an electric vehicle, an electric vehicle and a method for charging of an electric vehicle.

Electric vehicles configured for inductive charging comprise a secondary charging coil situated at the bottom of the vehicle. In order to charge a battery of the electric vehicle, the vehicle has to be parked at a parking space comprising a primary charging coil in the ground. During a charging process the primary charging coil generates an alternating magnetic field to induce an electric current in the secondary charging coil. As an efficiency of the charging process depends on the magnetic flux through an area surrounded by the secondary charging coil it is necessary to align the secondary charging coil at a specific charging position. Since the secondary charging coil is placed at a fixed position of the electric vehicle the alignment is carried out by manoeuvring the vehicle.

Since the driver of the vehicle cannot follow the current arrangement of the secondary charging coil with respect to the primary charging coils it is difficult to arrange the electric vehicle at the right position.

Electric vehicles may comprise devices, assisting a driver of the vehicle to manoeuvre the electric vehicle into the right position.

US 2011/0254503 A1 describes a wireless power antenna alignment adjustment system for vehicles. The system comprises a wireless power charging base including at least one antenna configured to be positioned within a vehicle parking area and a transmitter for transmitting at least one signal for guiding an electric vehicle within the vehicle parking area to enable a vehicle base of the electric vehicle to be positioned proximate to the charging base.

Other systems provide charging devices configured to align the primary charging coil of the charging system with respect to the secondary charging coil of the electric vehicle.

US 5498948 A disclosures a self-aligning inductive charging system for automatically arranging a charge probe to a charge port of an electric vehicle using a slidable alignment mechanism.

US 5461298 A disclosures an automatic electric vehicle charging system. The charging system is configured to automatically align a charge probe arm with respect to a vehicle in order to establish a power connection between the charge probe of the charging system and a charge port of the vehicle.

Another problem arises due to the fact that common charge stations are bound to a specific parking place. Therefore, it is necessary to move the electric vehicle away from the parking place to allow the charging of another vehicle.

It is an object of the present invention to provide a solution for aligning charging coils by means of a charging devices, without restricting the charging process to a specific parking area.

The object is accomplished by the subject matter of the independent claims. Advantageous developments with convenient and non-trivial further embodiments of the invention are specified in the dependent claims, the following description, and the drawings.

The invention comprises a charging device for inductive charging of an electric vehicle. The charging device is configured to supply power of an energy source of the charging device to a secondary charging coil of the vehicle by means of a primary charging coil of the charging device. In other words, the charging device is configured to generate an alternating magnetic field for the secondary charging coil of the electric vehicle by means of the primary charging coil to provide power of the energy source of the charging device to the electric vehicle. The energy source may comprise a battery or a connection to an electric network. The primary charging coil may be designed as a flat or a cylindrical shaped charging coil, surrounding an area. The charging device is configured to detect the secondary charging coil of the electric vehicle. In other words the charging device is configured to sense a position and a direction of the secondary charging coil of the electric vehicle. The secondary charging coil of the vehicle may be situated at the bottom of the electric vehicle and may face towards the ground. The primary charging coil of the charging device is mounted on top of a vehicle of the charging device, configured to laterally move the primary charging coil. In other words, the charging device comprises the vehicle configured to move the primary charging coil in a horizontal direction. The vehicle may comprise wheels driven by actuators. The charging device is configured to autonomously align the primary charging coil of the charging device in opposite to the secondary charging coil of the electric vehicle by means of the vehicle. In other words the charging device is configured to drive the primary charging coil to a position in which an area surrounded by the primary charging coil is facing to an area surrounded by the secondary charging coil with a maximum overlap of the two areas. The charging device may comprise a control unit and a sensor device to control the motion of the vehicle.

The invention has the advantage, that an alignment of the charging coil is possible without a maneuver of the electric vehicle.

The invention also comprises embodiments that provide additional technical advantages.

According to a further embodiment of the invention, the charging device is configured to vertically move the primary charging coil towards the secondary charging coil of the vehicle by means of a lifting device of the charging device. In other words the charging device comprises the lifting device configured to raise and lower the primary charging coil. The lifting device may comprise actuators arranged inside the vehicle that may move the primary charging coil in a vertical direction. The charging device may be configured to detect the distance between the primary charging coil and the secondary charging coil and may control the lifting device to minimize the vertical distance between the two coils. The embodiment has the advantage that the efficiency of the power transfer may be improved by the minimization of the vertical misalignment of the two coils.

According to a further embodiment of the invention, the vehicle of the charging device comprises a differential drive. In other words, the vehicle comprises at least two wheels that may be controlled individually to change the horizontal position and/or direction of the vehicle. The embodiment has the advantage, that the vehicle comprises a simple driving device that may rotate the vehicle at a fixed position. It may be possible that the differential drive comprises two wheels with individual actuators. The vehicle may also comprise one or two additional passive wheels to improve the stability.

According to a further embodiment of the invention, the charging device is configured to receive a request signal of the vehicle by means of a communication unit of the charging device. In other words the charging device comprises the communication unit configured to receive signals that comprise a command to charge the electric vehicle. The communication unit may comprise an antenna and a control unit to interpret the request signal. The communication unit may comprise a Bluetooth, Wi-Fi, or a mobile Internet device. The embodiment gives the advantage that the charging process may be initiated by the vehicle.

According to a further embodiment of the invention, the vehicle comprises a navigation unit, configured to determine a current geographic location of the vehicle. The navigation unit is configured to calculate a path from the current geographic location of the vehicle to the geographic location of the electric vehicle and to navigate the vehicle from the current geographic location of the vehicle to the geographic location of the electric vehicle. In other words, the vehicle is configured to drive to the position of the electric vehicle to be charged by the charging device, by means of the navigation unit. The navigation unit may be designed as a navigation computer comprising a Differential Global Positioning System (DGPS), a Galileo or a Global Navigation Satellite System receiver module that may be configured to determine the current geographic location of the vehicle and calculate the path to the geographic location of the electric vehicle. The navigation unit may be configured to control the drive of the vehicle.

According to a further embodiment of the invention, the charging device is configured to detect the secondary charging coil of the electric vehicle by means of a camera device of the charging device. In other words, the charging device comprises the camera device which is configured to detect the charging coil of the electric vehicle. The camera device may comprise one or two camera sensors, configured to detect objects like the secondary charging coils. The invention has the advantage, that it is possible to highlight the secondary charging coil to improve the detection of the secondary charging coil.

According to a further embodiment of the invention, the energy source of the charging device comprises a battery mounted in the vehicle. In other words the energy of the charging process is provided by the battery arranged in the vehicle. The invention has the advantage, that the charging device can operate independent of an infrastructure unit during the charging process. It may be possible, that the charging device comprises a lithium ion battery to store the energy for the charging process.

According to a further embodiment of the invention, the energy source of the charging device comprises a base station arranged external to the vehicle and connected to the primary charging coil by means of a cable. In other words, the primary charging coil on the vehicle is connected to the base station by the cable, wherein the base station is outside the vehicle. The invention has the advantage, that an amount of energy is not limited by a capacity of a battery inside the vehicle. It may be possible, that the charging device comprises a base station at a position close to a parking place. The vehicle may be connected to the base station by the cable. The primary charging coil of the charging device may be supplied with power during the charging process over the cable.

According to a further embodiment of the invention, the charging device is configured to detect the secondary charging coil of the car by means of a navigation signal of the electric vehicle. In other words the charging device is configured to receive navigation signals originating from a navigation unit of the electric vehicle. The embodiment has the advantage, that the vehicle may be guided to the secondary charging coil by the navigation unit. The navigation unit of the electric vehicle may be placed at the secondary charging coil of the electric vehicle. The navigation unit may send the navigation signal. By receiving the navigation signal, the navigation unit of the charging device may determine a direction and a distance of the secondary charging coil with respect to the primary charging coil of the charging device.

According to a further embodiment of the invention, the charging device is configured to detect the location of the secondary charging coil by means of a magnetic field of the secondary charging coil. In other words the charging device is configured to detect a vertical or horizontal misalignment between the two charging coils by means of a magnetic field, detected by the primary charging coil. The embodiment has the advantage, that the alignment may be improved by detecting the magnetic field.

It may be possible, that the secondary charging coil provides an alternating magnetic field during the so-called polling process. The charging device may be configured to detect the alternating magnetic field by means of the primary charging coil and determine a misalignment between the two charging coils depending on the magnetic flux through the primary charging coil.

The invention also comprises an electric vehicle, comprising the secondary charging coil. The electric vehicle comprises a navigation unit, configured to determine a geographic location of the electric vehicle. In other words the electric vehicle is configured to determine its geographic location by means of the navigation unit. The navigation unit may comprise a DGPS, a Galileo or a GLONASS unit. The electric vehicle comprises a communication unit, configured to send a request signal to request a charging process from a charging device, comprising the geographic location of the electric vehicle. In other words, the electric vehicle is configured to order energy from the charging the wireless by means of the communication unit. The request signal to order the energy, comprises the geographic location of the electric vehicle, measured by the navigation unit of the electric vehicle. The communication unit may comprise the Bluetooth a WIFI or a mobile Internet module.

The invention comprises a method for inductive charging of an electric vehicle by a charging device comprising a primary charging coil mounted on top of the vehicle of the charging device. The method comprises the steps of detecting a secondary charging coil of the electric vehicle by the charging device. In other words in the 1^{st} step the charging device sensors the position of the secondary charging coil of the vehicle. In the 2^{nd} step the charging device autonomously aligns the primary charging coil of the charging device in opposite to the secondary charging coil of the electric vehicle by means of the vehicle. In other words the vehicle of the charging device drives to a position in which the primary charging coil of the charging device is faced to the secondary charging coil of the vehicle. In the last step, the charging device supplies power of an energy source of the charging device to the secondary charging coil of the electric vehicle by means of the primary charging coil of the charging device. In other words, the charging device supplies energy of the energy source to the electric vehicle by generating an alternating magnetic field flowing through the secondary charging coil of the electric vehicle.

The invention also comprises the combinations of the features of the described embodiments.

In the following an exemplary implementation of the invention is described. The figures show:
- Fig. 1: a schematic illustration of an embodiment of a charging device;
- Fig. 2: another schematic illustration of an embodiment of a charging device;
- Fig. 3: a schematic illustration of an embodiment of an electric vehicle;
- Fig. 4: a schematic illustration of a charging process of an electric vehicle; and
- Fig. 5: a schematic illustration of a method;

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

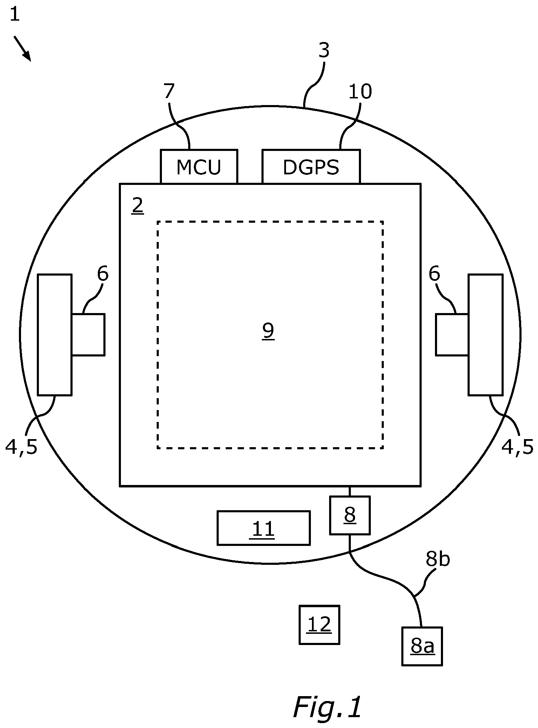

Fig. 1 shows a schematic illustration of a charging device. The charging device 1 may comprise a primary charging coil 2. The primary charging coil 2 may be arranged on top of a vehicle 3 of the charging device 1. The vehicle 3 may be designed as a mobile robot comprising a differential drive 4, wherein the differential drive 4 comprises two wheels 5, wherein each of the two wheels 5 may be driven by a respective actuator 6. The charging device 1 may comprise a control unit 7 configured to control the actuators 6 in order to laterally move or rotate the vehicle 3. The charging device 1 may comprise an energy source 8 designed as a battery that may be arranged inside the vehicle 3. To provide power to the primary charging coil 2 independent of an infrastructure unit, the energy source 8 may comprise a base station 8a connected to the primary charging coil 2 by a cable 8b. The charging device 1 may comprise a lifting device 9 configured to change a vertical position of the primary charging coil 2. The charging device 1 may comprise a navigation unit 10 configured to determine a position of the vehicle 3 of the charging device 1. The navigation unit 10 may comprise a DGPS module, a GLONASS module or a Galileo module. The charging device may comprise the communication unit 11 configured to receive a request signal 12 to initiate a charging process by an electric vehicle 13.

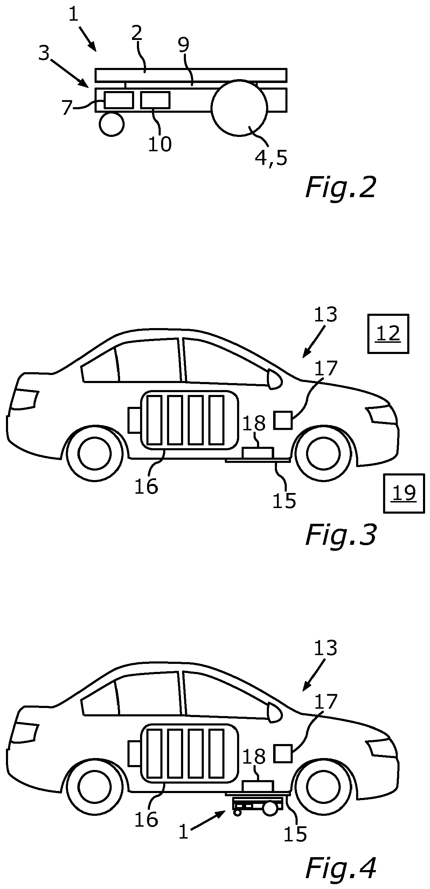

Fig. 2 shows another schematic figure of the charging device. The charging device 1 may comprise the lifting device 9 situated at the top of the vehicle 3 to allow a vertical motion of the primary charging coil 2. The charging device 1 may comprise a camera device 14 to detect the position of a secondary charging coil 15 of the electric vehicle 13. The camera device 14 may comprise two cameras to allow a stereoscopic sensing of the environment or a single fisheye camera.

Fig. 3 shows a schematic illustration of an electric vehicle. The electric vehicle 13 may be a car configured to transport goods or passengers. The electric vehicle 13 may be configured as a hybrid or pure electric car. The electric vehicle 13 may comprise a battery 16 to store energy. In order to charge the battery 16 via inductive charging, the electric vehicle 13 may comprise the secondary charging coil 15. The secondary charging coil 15 may be configured to receive an alternating magnetic field to provide electric energy to the battery 16 by electromagnetic induction. To order energy from the charging device 1, the electric vehicle 13 may comprise a communication unit 11 to send the request signal 12 to the charging device 1. The request signal 12 may comprise an amount of energy ordered by the electric vehicle 13. The request signal 12 may also comprise the current geographic location of the electric vehicle 13. In order to detect the current geographic location of the electric vehicle 13, the electric vehicle 13 may comprise a navigation unit 18. The navigation unit 18 may be arranged at a predefined position related to the secondary charging coil 15. The navigation unit 18 may send navigation signals 19 to allow a detection of the position of the secondary charging coil 15 by the charging device 1.

Fig. 4 shows a schematic illustration of the charging process between the charging device 1 and the electric vehicle 13. In order to perform the charging process, the charging device 1 may arrange the primary charging coil 2 at a specific charging position related to the secondary charging coil 15 of the electric vehicle 13. The charging device 1 device may determine the position of the secondary charging coil 15 by the camera device 14 or the navigation unit 10 of the vehicle 3 which may receive the navigation signals 19 sent by the navigation unit 18 of the electric vehicle 13. The charging device 1 may also be configured to receive the magnetic field produced by the secondary charging coil 15 during a polling process. The control unit 7 of the charging device 1 may calculate a vertical and or a horizontal misalignment between the charging coils 2, 15 depending on the magnetic field.

The vehicle 3 may horizontally align the primary charging coil 2 in front of the secondary charging coil 15 by controlling the differential drive 4. The charging device 1 may vertically arrange the primary charging coil 2 by means of the lifting device 9 to minimise a distance between the primary charging coil 2 and the secondary charging coil 15.

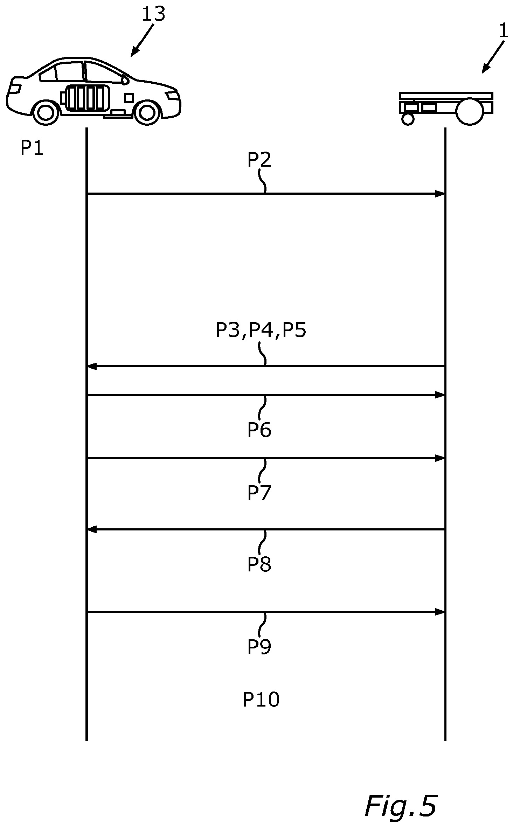

Fig. 5 shows a schematic illustration of a method to charge an electric vehicle by the charging device. In a 1^{st} step P1 the electric vehicle 13 may park at a parking place.

In a 2^{nd} step P2 the electric vehicle 13 may send the request signal 12 to the charging device 1 to initiate a charging process of the battery 16 of the electric vehicle 13 by the charging device 1. The request signal 12may be sent by means of the communication unit 17 of the electric vehicle 13. The request signal 12 may comprise the geographic location of the electric vehicle 13.

In step P3 the charging device 1 may receive the request signal 12 by means of the communication unit 11 of the charging device 1.

In step P4, the navigation unit 10 may determine the current geographic location of the vehicle 3. The control unit 7 may calculate a path from the current geographic location of the vehicle 3 to the position of the electric vehicle 13.

In step P5, the control unit 7 may control the differential drive 4 of the vehicle 3 to drive the vehicle 3 to the position of the electric vehicle 13.

In step P6 the charging device 1 may determine the position of the secondary charging coil 15 of the electric vehicle 13. The detection may be performed by the camera device 14 of the charging device 1. It is also possible, that the navigation unit 18 of the electric vehicle 13 sends navigation signals 19 to guide the vehicle 3 to the secondary charging coil 15. The control unit 7 of the charging device 1 may control the differential drive for 2 align the primary charging coil to horizontally to the secondary charging coil 15.

When the horizontal alignment has finished, the charging device 1 may transmit a signal by means of the communication unit 11 of the charging device 1 to the communication unit 17 of the electric vehicle 13 to initiate a polling process (P7). The polling process may be performed before the charging process, wherein one or both of the charging coils 2, 15 may generate alternating magnetic fields to determine a distance between the coils 2, 15. The charging device 1 may adjust the distance between the primary charging coil 2 and the secondary charging coil 15 by means of the lifting device 9 to minimise the distance (P8).

When the charging process has finished, the electric vehicle 13 may sent a determination signal to the charging device 1 (P9).

In the last step P10, the charging device 1 may drive to a base station of the vehicle 3 to wait for the next order or charge another electric vehicle.

The vehicle 3 (charging pad alignment robot) can align itself with the electric vehicle 13 (car) even if it is far away from the charging zone. So, it is not required that the car aligns itself within a certain distance from the charging system. Once the robot has finished charging a car, it can charge another car. Installation is simple and no space is occupied

The proposed method is to include a primary charging coil 2 (wireless charging pad), carried/controlled by the vehicle (robot). Instead of fixing the position of the primary charging coil 2 (charging pad) and assisting the driver to drive over the charging pad, this method is to let the driver park at his comfort and later signal the charging pad to locate the charge location. So the robotic charging pad equipped with wheels can navigate and locate the charging pad under the car and charge up the car. The robot will be equipped with BCCMB/DGPS receiver module (To locate the car), Actuators for mobility with differential drive, Micro controller to compute and some communication channel like RF/Bluetooth to communicate with the car. The car with be equipped with BCCMB/DGPS transmitter module and RF/Bluetooth kind of communication channel. Once the car is being parked the car may send a request signal 12 to charging pad robot to charge the car. Reading this signal the charging pad locates/senses the car pad location and orientation. Then the path is planned (using path planning algorithm running on the robot controller) by the robot to move to the destination location. After the robot reaches the destination location, the robot can adjust its height, position and orientation to get maximum possible contact/alignment to charge the car.

The driver does not need to worry about aligning the charging pad. Recharge is taken care of the robot. Anytime the robot can adjust itself to get maximum possible contact. This makes it a flexible, robust solution for maximizing performance and quality. Instead of asking a car which is a big rigid body to adjust and align to the pad. Make the small charging pad mobile, adjust and align to the charging pad, which can be easily controlled. This make it more convenient and sensible approach. DGPS is accurate with respect to position and orientation and can align itself with the secondary charging coil 15 (car's wireless charging pad).

Overall, the example shows how a solution to charge a vehicle is provided by the invention.

### Reference signs

- 1: charging device
- 2: primary charging coil
- 3: vehicle
- 4: differential drive
- 5: wheel
- 6: actuator
- 7: control unit
- 8: energy source
- 8a: base station
- 8b: cable
- 9: lifting device
- 10: navigation unit
- 11: communication unit
- 12: request signal
- 13: electric vehicle
- 14: camera device
- 15: secondary charging coil
- 16: battery
- 17: communication unit
- 18: navigation unit
- 19: navigation signal

- P1-P10: steps

## Claims

1. Charging device (1) for inductive charging of an electric vehicle (13),
wherein
- the charging device (1) is configured to supply power of an energy source (8) of the charging device (1) to a secondary charging coil (15) of the electric vehicle (13) by means of a primary charging coil (2) of the charging device (1),
- the charging device (1) is configured to detect the secondary charging coil (15) of the electric vehicle (13),
**characterized in that**,
- the primary charging coil (2) is mounted on top of a vehicle (3) of the charging device (1), configured to laterally move the primary charging coil (2),
- the charging device (1) is configured to autonomously align the primary charging coil (2) of the charging device (1) in opposite to the secondary charging coil (15) of the electric vehicle (13) by means of the vehicle (3).

2. Charging device (1) according to claim 1,
**characterized in that**,
the charging device (1) is configured to vertically move the primary charging coil (2) towards the secondary charging coil (15) of the electric vehicle (13) by means of a lifting device (9) of the charging device (1).

3. Charging device (1) according to claim 1 or 2,
**characterized in that**,
the vehicle (3) of the charging device (1) comprises a differential drive (4).

4. Charging device (1) according to any of the preceding claims,
**characterized in that**,
the charging device (1) is configured to receive a request signal (12) of the electric vehicle (13), by means of a communication unit (11) of the charging device (1).

5. Charging device (1) according to claim 4,
**characterized in that**,
the vehicle (3) comprises a navigation unit (10), configured to
- determine a current geographic location of the vehicle (3), calculate a path from the current geographic location of the vehicle (3) to the geographic location of the electric vehicle (13), and
- navigate the vehicle (3) from the current geographic location of the vehicle (3) to the geographic location of the electric vehicle (13).

6. Charging device (1) according to any of the preceding claims,
**characterized in that**,
the charging device (1) is configured to detect the secondary charging coil (15) of the vehicle (13) by means of a camera device (14) of the charging device (1).

7. Charging device (1) according to any of the preceding claims,
**characterized in that**,
the energy source (8) of the charging device (1) comprises a battery mounted in the vehicle (3).

8. Charging device (1) according to any of the preceding claims, **characterized in that**,
the energy source (8) comprises a base station (8a) arranged external to the vehicle (3) and connected to the primary charging coil (2) by means of a cable (8b).

9. Charging device (1) according to any of the preceding claims,
**characterized in that**, the charging device (1) is configured to detect the secondary charging coil (15) of the electric vehicle (13) by means of a navigation signal (19) of the electric vehicle (13).

10. Charging device (1) according to any of the preceding claims,
**characterized in that**, the charging device (1) is configured to detect the location of the secondary charging coil (15) of the electric vehicle (13) by means of a magnetic field of the secondary charging coil (15).

11. Electric vehicle (13), comprising a secondary charging coil (15),
**characterized in that**,
the electric vehicle (13) comprises
- a navigation unit (18), configured to determine a geographic location of the electric vehicle (13),
- a communication unit (17), configured to send a request signal (12) to request a charging process from a charging device (1), comprising the geographic location of the electric vehicle (13).

12. Method for inductive charging of an electric vehicle (13) by means of a charging device (1) comprising a primary charging coil (2) mounted on top of a vehicle (3) of the charging device (1)
comprising the steps of:
- detecting the secondary charging coil (15) of the electric vehicle (13) by the charging device (1),
- autonomously aligning the primary charging coil (2) of the charging device (1) in opposite to the secondary charging coil (15) of the electric vehicle (13) by means of the vehicle (3), and
- supplying power of an energy source (8) of the charging device (1) to a secondary charging coil (15) of the vehicle (13) by means of the primary charging coil (2) of the charging device (1).
